# EUROPEAN PATENT APPLICATION

(11) **EP 3 337 230 A1**
(43) Date of publication of application: **20.06.2018**
(21) Application number: 16835099.9
(22) Date of filing: 05.08.2016
(51) Int. Cl.: H04W 28/04, H04W 72/04

(54) **USER TERMINAL, WIRELESS BASE STATION, AND WIRELESS COMMUNICATION METHOD**

(30) Priority: 13.08.2015 JP 2015159998
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN)
(74) Representative: Hoffmann Eitle
(86) International application number: PCT/JP2016/073147
(87) International publication number: WO 2017/026402

(57) **Abstract**

The present invention is designed so that HARQ-ACKs can be fed back adequately even when a plurality of component carriers are configured in a radio communication system. The present invention provides a receiving section that receives DL signals transmitted from a plurality of cells, and a control section that controls the transmission of ACKs/NACKs in response to the received DL signals, and, when downlink control information of a plurality of cells is received, the control section controls the transmission of the ACKs/NACKs using an uplink control channel resource that is configured for the cell where the value of a DL assignment index included in the received downlink control information is the largest or for the cell with the largest cell index.

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, successor systems of LTE (also referred to as, for example, "LTE-advanced" (hereinafter referred to as "LTE-A"), "FRA" (Future Radio Access) and so on) are under study for the purpose of achieving further broadbandization and increased speed beyond LTE.

The system configuration of LTE Rel. 10-12 includes at least one component carrier (CC), where the LTE system band constitutes one unit. Such bundling of a plurality of component carriers (cells) into a wide band is referred to as "carrier aggregation" (CA). In LTE Rel. 10-12 systems, CA to use maximum 5 CCs is utilized.

In LTE systems, hybrid automatic repeat request (HARQ: Hybrid Automatic Repeat reQuest) is supported in order to suppress degradation of communication quality due to signal reception failures in radio communication between a user terminal (UE) and a radio base station (eNB). For example, a user terminal feeds back delivery acknowledgment signals (referred to as "HARQ-ACKs," and also referred to as "ACK/NACKs") depending on the condition of reception of DL signals transmitted from a radio base station. There is a rule that, when the user terminal transmits HARQ-ACKs in an uplink control channel (PUCCH), the user terminal uses predetermined PUCCH formats according to the number of CCs (or cells) and so on (see non-patent literature 2).

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: 3GPP TS 36.213 "Evolved Universal Terrestrial Radio Access (E-UTRA) Physical layer procedures (Release 12)"

### Summary of Invention

### Technical Problem

In existing LTE systems (Rel. 12 or earlier versions), the bit size of ACKs/NACKs (also referred to as the "codebook size" and the "bit sequence size") that are fed back by a user terminal is semi-statically determined in advance, based on information reported from a radio base station through higher layer signaling (the number of CCs and so on). Therefore, when applying CA, the user terminal feeds back ACKs/NACKs in a codebook size that is fixedly determined based on the number of CCs and so on.

Therefore, when the number of CCs configured in the user terminal and the number of CCs where DL signals are scheduled in a given subframe are different, the codebook size cannot be changed in the user terminal. This might result in the case where, even when the number of CCs that are actually scheduled is small, the size of ACKs/NACKs to be transmitted is unnecessarily large.

Also, although, in Rel. 12 or earlier versions, the maximum number of CCs that can be configured in CA is 5, the number of configurable CCs is expected to be increased in Rel. 13 and later versions. In this case, if the bit size of ACKs/NACKs is determined in the same way as in existing LTE systems, the number of CCs that are configured and the number of CCs that are scheduled may differ significantly. This may result in increasing the overhead of UL transmission.

Meanwhile, it may be possible to dynamically control the codebook size of HARQ-ACKs to feed back, based on, for example, DL signals received in the user terminal (for example, based on the number of CCs where DL signals are received). However, if the user terminal fails to detect DL signals or makes error detection, this may lead to the situation where the recognition of the codebook size differs between the radio base station and the user terminal. In this case, there is a possibility that the radio base station is unable to properly decode the ACKs/NACKs fed back from the user terminal, and the quality of communication may be lowered.

The present invention has been made in view of the above, and it is therefore an object of the present invention to provide a user terminal, a radio base station and a radio communication method that enable of adequate feedback of HARQ-ACKs and that can prevent the decrease of communication quality even when a plurality of component carriers are configured in a radio communication system.

### Solution to Problem

According to one aspect of the present invention, a user terminal has a receiving section that receives DL signals transmitted from a plurality of cells, and a control section that controls the transmission of ACKs/NACKs in response to the received DL signals, and, in this user terminal, when downlink control information of a plurality of cells is received, the control section controls the transmission of the ACKs/NACKs using an uplink control channel resource that is configured for the cell where the value of a DL assignment index included in the received downlink control information is the largest or for the cell with the largest cell index.

### Advantageous Effects of Invention

According to one aspect of the present invention, it is possible to feed back HARQ-ACKs adequately and prevent the decrease of communication quality even when a plurality of component carriers are configured in a radio communication system.

### Brief Description of Drawings

FIG. 1A is a diagram to illustrate an example of downlink scheduling of a user terminal in which five CCs are configured, and FIG. 1B is a diagram to illustrate an example of downlink scheduling of a user terminal in which 32 CCs are configured;
FIG. 2 is a diagram to illustrate an example of recognition of scheduling CCs between a user terminal and a radio base station;
FIG. 3 is a diagram to illustrate an example of ACK/NACK transmission using DAIs;
FIG. 4 is a diagram to illustrate an example of an ACK/NACK transmission method according to the first example;
FIG. 5 is a diagram to illustrate other examples of an ACK/NACK transmission method according to the first example;
FIG. 6A is a diagram to illustrate an example of a table for use when a plurality of cells are grouped according to the second example, and FIG. 6B is a diagram to illustrate an example of an ACK/NACK transmission method for use when a plurality of cells are grouped according to the second example;
FIG. 7A is a diagram to illustrate an example of a subframe configuration for use for transmission of uplink control information in the second example, and FIG. 7B is a diagram to illustrate another example of a subframe configuration for use for transmission of uplink control information in the second example;
FIG. 8 is a diagram to illustrate a schematic structure of a radio communication system according to an embodiment of the present invention;
FIG. 9 is a diagram to illustrate an example of an overall structure of a radio base station according to an embodiment of the present invention;
FIG. 10 is a diagram to illustrate an example of a functional structure of a radio base station according to one embodiment of the present invention;
FIG. 11 is a diagram to illustrate an example of an overall structure of a user terminal according to an embodiment of the present invention; and
FIG. 12 is a diagram to illustrate an example of a functional structure of a user terminal according to an embodiment of the present invention.

### Description of Embodiments

In LTE systems, retransmission control (HARQ-ACK (Hybrid Automatic Repeat reQuest Acknowledgment), ACK/NACK (ACKnowledgments/Negative ACKnowledgment), etc.) is supported in wireless communication between user terminals and radio base stations using a plurality of CCs (cells). For example, the user terminal feeds back ACKs/NACKs (or DTX) to the radio base station based on the receiving results of DL signals transmitted from the radio base station.

In LTE systems, a plurality of PUCCH formats for allowing user terminals to transmit ACKs/NACKs (HARQ-ACKs) to radio base stations by using an uplink control channel (PUCCH) are defined. Here, ACK/NACKs are formed with a bit sequence of a predetermined length, comprised of bits that represent ACKs or NACKs.

For example, when PUCCH format 1a/1b is configured in the user terminal, the user terminal transmits an ACK/NACK signal in a PUCCH resource that corresponds to a CCE/ECCE (Control Channel Element/Enhanced CCE) index of a control channel (PDCCH/EPDCCH) that schedules the PDSCH, without encoding.

Also, when PUCCH format 3 is configured in the user terminal, the user terminal interprets the TPC (Transmit Power Control) field (TPC command bit) included in the PDCCH/EPDCCH of an SCell, as an ARI (Ack/nack Resource Indicator), and transmits an ACK/NACK signal using one PUCCH resource that is specified by the ARI among four resources that are configured by higher layer signaling. At this time, the value of the ARI is preferably the same between PDCCHs and EPDCCHs that schedule the PDSCHs of different SCells. In PUCCH format 3, when FDD (Frequency Division Duplex) is used, a codebook size of maximum 10 bits is configured, and, when TDD (Time Division Duplex) is used, a codebook size of maximum 21 bits is configured, and these are used for ACKs/NACKs.

In existing systems (LTE Rel. 10 to 12), as mentioned earlier, the codebook size of HARQ-ACKs (ACK/NACK bit sequence) to be transmitted on the PUCCH is determined semi-statically based on information reported by higher layer signaling.

In the case of using FDD, the overall ACK/NACK (A/N) bit size is determined based on the number of CCs configured by RRC signaling and the TM (Transmission Mode), which indicates whether MIMO (Multiple Input Multiple Output) is applicable in each CC. In this case, the user terminal transmits the ACK/NACK bit sequence based on higher layer signaling regardless of the number of CCs to be scheduled.

In the case of using TDD, in addition to the above case of using FDD, the overall ACK/NACK bit sequence size is determined based on the number of DL subframes subject to feedback of delivery acknowledgment signals (ACKs/NACKs) per PUCCH in one UL subframe. The user terminal transmits the ACK/NACK bit sequence based on higher layer signaling, irrespective of the number of CCs to be scheduled and the number of subframes included in the scheduling information.

In this way, when the bit size of ACKs/NACKs to be fed back is determined based on information reported by higher layer signaling, the situation might arise where the ACK/NACK bit size does not match the number of CCs actually scheduled in the user terminal.

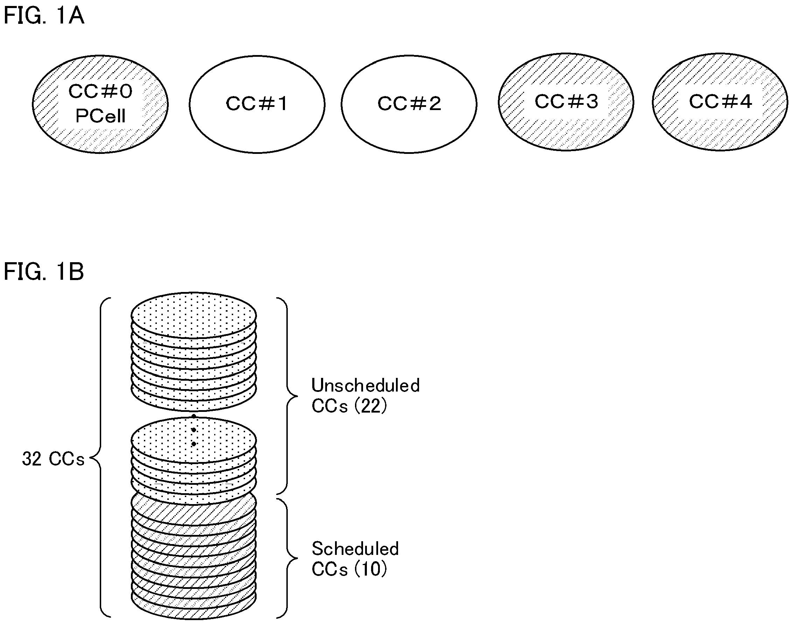

For example, assume the case where five CCs (CCs #0 to #4) are configured in the user terminal that uses CA, and where a DL signal is transmitted to the user terminal using 3 CCs (CCs #0, #3 and #4) in a given subframe (see FIG. 1A). In the example illustrated in FIG. 1A, only three CCs -- CC #0, CC #3 and CC #4 -- are scheduled. However, since the ACK/NACK size reported from higher layer signaling corresponds to five CCs, the user terminal transmits ACKs/NACKs for five CCs. In this case, since the PDCCHs/EPDCCHs corresponding to unscheduled CCs (CC #1 and CC #2) cannot be detected, the user terminal determines that NACKs should be fed back.

In existing systems, even when the ACK/NACK codebook size to match the CCs that are actually scheduled (CCs where DL signals are transmitted) is different from the codebook size reported by higher layer signaling, the user terminal still cannot change the codebook size.

Now, in CA in LTE Rel. 10 to 12, the number of CCs that can be configured per user terminal is limited to maximum five. On the other hand, in LTE Rel. 13 and later versions, in order to realize more flexible and faster wireless communication, a study is in progress to reduce the limit on the number of CCs that can be configured in a user terminal and to configure 6 or more CCs (more than five CCs, up to, for example, 32 CCs) (see FIG. 1B). Here, carrier aggregation in which six or more CCs can be configured may be referred to as, for example, "enhanced CA," "Rel. 13 CA," and so on.

As described above, when the number of CCs to be configured is expanded, it is possible that the gap between the number of CCs configured and the number of CCs scheduled in each subframe increases. If the number of CCs where DL signals are scheduled is less than the number of CCs to be configured and the codebook size is determined semi-statically as in conventional cases, this leads to the situation where most of the ACKs/NACKs transmitted from the user terminal are NACKs. For example, FIG. 1B illustrates a case where 32 CCs are configured in the user terminal and where the number of CCs actually scheduled is 10. In this case, the number of actually scheduled cells (ten CCs) is smaller than the total number of CCs (32 CCs), and more than half of the CCs are returned NACKs.

Also, the smaller the ACK/NACK codebook size, the smaller the amount of information transmitted by the user terminal. Therefore, if the codebook size of ACKs/NACKs can be reduced, the quality of communication (SINR: Signal to Interference plus Noise Power Ratio) required in radio transmission can be kept low. For example, in CA using five CCs at a maximum, the SINR required in ACK/NACK transmission can be kept low by decreasing the codebook size of ACKs/NACKs fed back by the user terminal according to the CCs that are scheduled.

Therefore, it is effective to make it possible to dynamically change the codebook size of ACKs/NACKs (HARQ-ACKs) that the user terminal feeds back, according to the number of CCs that are scheduled.

In the case where the codebook size of ACKs/NACKs to be fed back from the user terminal can be changed dynamically, for example, the user terminal may change the number of ACK/NACK bits dynamically depending on the number of scheduled CCs and so on. As a method of changing the number of ACK/NACK bits dynamically like this, for example, the user terminal may determine the number of ACK/NACK bits based on the number of downlink signals detected (for example, PDSCH-scheduling PDCCHs/EPDCCHs).

In this way, by controlling the codebook size of ACKs/NACKs based on downlink control information (PDCCH/EPDCCH) detected by the user terminal, the codebook size can be appropriately reduced according to the number of CCs that are scheduled.

Incidentally, in a PUCCH format (for example, format 3) for use for ACKs/NACKs to which CA is applied, the ACK/NACK bit sequence is subjected to error correction coding (for example, block coding) and transmitted. Therefore, if the recognition of the codebook size does not match between the user terminal that performs encoding and the radio base station that performs decoding, the radio base station cannot correctly decode the ACKs/NACKs fed back from the user terminal.

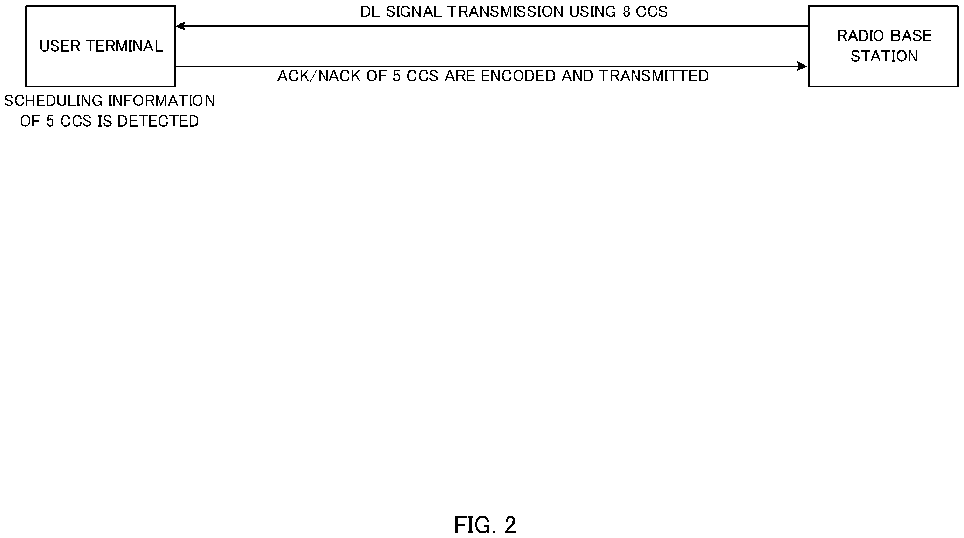

For example, when a detection failure or error detection occurs and the number of CCS which the user terminal recognizes is different from the number of CCs actually scheduled, the situation arises where the recognition of the codebook (bit sequence) size does not match between the radio base station and the user terminal (see FIG. 2). FIG. 2 illustrates a case where, although the radio base station performs scheduling (DL signal transmission) for the user terminal by using 8 CCs, the user terminal detects only the PDCCHs/EPDCCHs (scheduling information) for five CCs. That is, the user terminal fails to detect the DL signals (for example, PDCCHs/EPDCCHs) of 3 CCs.

Referring to FIG. 2, if the ACK/NACK codebook size is determined based on the DL signals (the number of CCs) detected by the user terminal, the user terminal transmits an ACK/NACK bit sequence for the five CCs detected, to the radio base station. For this reason, the radio base station cannot perform decoding properly, and the entire ACK/NACK bit sequence is affected, and the quality of feedback using ACKs/NACKs is severely deteriorated.

In this way, when the user terminal fails to detect DL signals transmitted from the radio base station in a predetermined CC, the user terminal judges the number of CCs allocated smaller than the number of CCs in which DL signals are transmitted from the radio base station. Further, when the user terminal makes error detection of DL signals transmitted from the radio base station, the user terminal judges the number of allocated CCs bigger than the number of CCs in which DL signals are transmitted from the radio base station.

Although the method of determining the codebook size of ACKs/NACKs to transmit from the user terminal based on the number of PDCCHs/EPDCCHs detected is easy to implement, when detection failures or error detections occur, the recognition of the codebook size does not match between the radio base station and the user terminal. In this case, as described above, the quality of feedback based on ACKs/NACKs deteriorates, and the quality of communication may be severely deteriorated.

Alternatively, the user terminal may identify the cells scheduled in a given subframe (cells where DL transmission has been performed) based on the DL assignment index (DAI: Downlink Assignment Indicator (Index)) included in each cell's downlink control information. DAIs are values assigned to every scheduled cell and are used to indicate the number (cumulative number) of scheduling cells.

For example, the radio base station includes different DAIs in every scheduled cell's downlink control information and transmits the same. The DAIs to be included the downlink control information of cells can be configured in ascending order based on, for example, cell indices and/or the like. In this case, the DAI of the cell with the largest cell index among the scheduled cells is the maximum DAI (the number of scheduled cells).

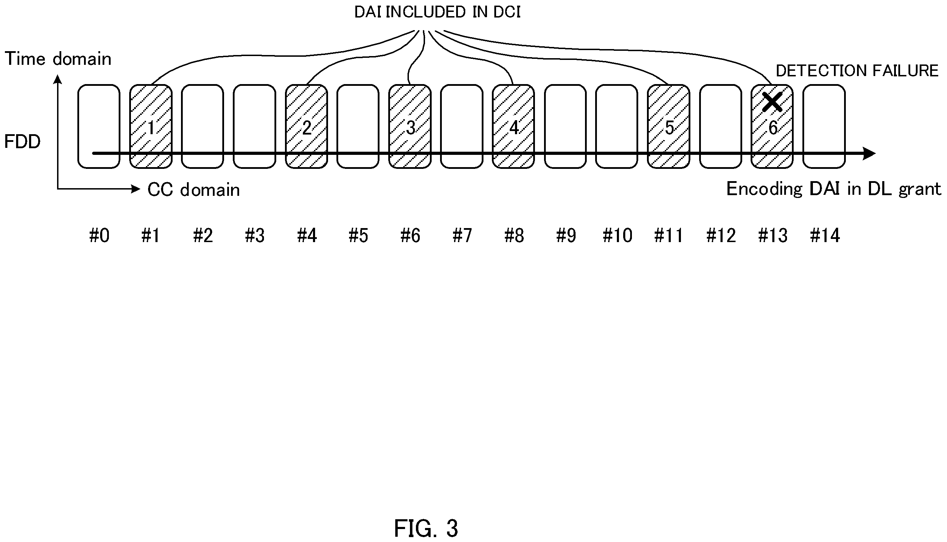

Assuming the case where DL signals are received from a plurality of cells, if the values of the DAIs (cumulative numbers) included in the downlink control information of the cells are not continuous, the user terminal can judge that it has made a detection failure in the cell corresponding to the missing DAI. For example, as illustrated in FIG. 3, assume the case where, in a given subframe, DL transmission is made using 6 CCs (CC #1, #4, #6, #8, #11 and #13) to a user terminal where 15 CCs are configured.

In this case, the radio base station configures different DAIs (1 to 6) in the downlink control information of the 6 CCs (CCs #1, #4, #6, #8, #11 and #13) and transmits the same. For example, if the user terminal fails to detect CC #6, then the DAIs detected in the user terminals are 1, 2, and 4 to 6, so that the user terminal can judge that it has made a detection failure with respect to a predetermined CC. In this case, the user terminal can decide to feed back a NACK with respect to the CC which the user terminal has failed to detect, and, furthermore, determine the ACK/NACK codebook size based on the largest DAI detected (here, 6) and send feedback. The radio base station can retransmit the DL signal in CC #6 based on the information fed back from the user terminal.

In this way, by using DAIs, it is possible to match the recognition of the ACK/NACK codebook size between the user terminal and the radio base station, and, furthermore, on the radio base station side, apply appropriate retransmission control to CCs which the user terminal fails to detect.

However, the present inventors have found out that, even when DAIs are used, if the user terminal fails to detect the cell in which the DAI included in the downlink control information is the largest among the scheduled cells, the user terminal is unable to recognize this detection failure. For example, in FIG. 3, even if the user terminal fails to detect CC #13, the DAIs detected in the user terminal are 1 to 5 and consecutive, and therefore the user terminal is unable to recognize that it has failed to detect CC #13. In this case, the user terminal judges that five CCs (CCs #1, #4, #6, #8 and #11) are scheduled, and determines the codebook size and feeds back ACKs/NACKs accordingly. This result in the situation where the recognition of the ACK/NACK codebook size is inconsistent between the user terminal and the radio base station.

So, the present inventors have come up with the idea that information to indicate whether or not a cell where DL transmission is performed (scheduling target cell) is a specific cell can be included in each cell's downlink control information and reported to the user terminal. For example, when downlink control information of a plurality of cells is received, the user terminal controls the transmission of ACKs/NACKs using the uplink control channel resource configured in the cell having the largest DL assignment index value included in the downlink control information.

With this, the radio base station can know the status of detection by the user terminal based on the uplink control channel resource to which ACK/NACK from the user terminal is allocated. base station and the user terminal, and HARQ-ACKs can be properly fed back, and the deterioration in communication quality can be suppressed.

The present inventors have also come up with the idea of feeding back information on cells from which the user terminal receive DL signals (scheduling information of detected cells) and ACK/NACK results, including at least ACKs/NACKs for received DL signals. For example, cells that are configured in the user terminal (or cells that can be configured) are classified into a plurality of groups, and information on groups to which cells where DL signals are received belong, and the transmission of ACKs/NACKs in response to DL transmission to cells included in these groups are controlled.

With this, the radio base station can confirm the status of detection by the user terminal based on the information on the cells of DL signals received by the user terminal. As a result, it is possible to match the recognition of the ACK/NACK codebook size between the user terminal and the radio base station, appropriately feed back HARQ-ACKs, and suppress the deterioration of communication quality.

Now, embodiments of the present invention will be described below. In the following description, the information on the cells of DL signals received by the user terminal may be information on cells (or CCs) detected by the user terminal, and, for example, the cell indices of cells (CCs) to be scheduled can be used. Alternatively, when a plurality of CCs are classified into predetermined groups, information about a cell group including at least a scheduling-target cell can be used.

In addition, although PUCCH format 3 can be used for HARQ-ACK feedback, this is not limiting. It is equally possible to use a new PUCCH format having larger capacity than PUCCH format 3. When dual connectivity (DC) is used, MCG to include PCell and SCG to include PSCell that transmits the PUCCH are classified, but it is also possible to replace PSCell with PCell and apply this to SCG. Also, the number and arrangement of cells to be scheduled, the indices of cells to be scheduled, and the signals to be transmitted are not limited to those in the following examples.

### (First Example)

In the first example, a case where ACK/NACK transmission is performed by configuring an uplink control channel resource that is different from those of other cells at least in the cell with the largest DAI value among the cells to be scheduled will be described.

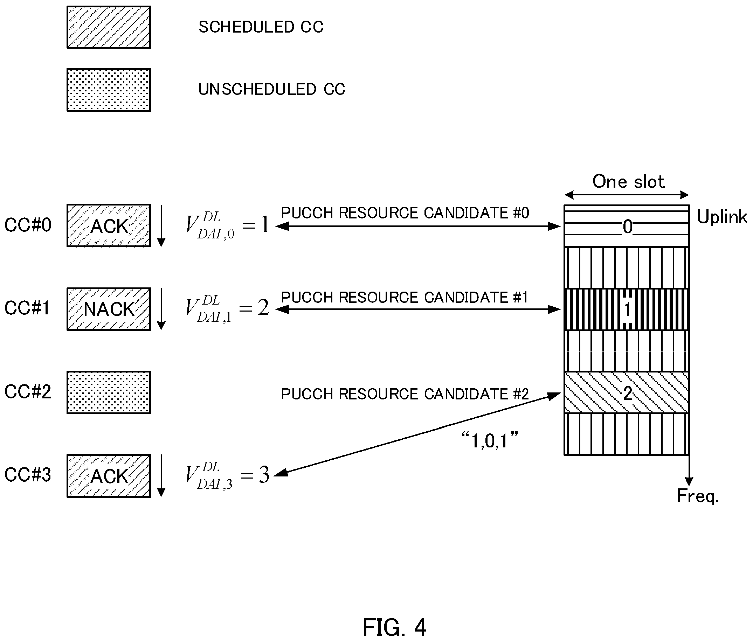

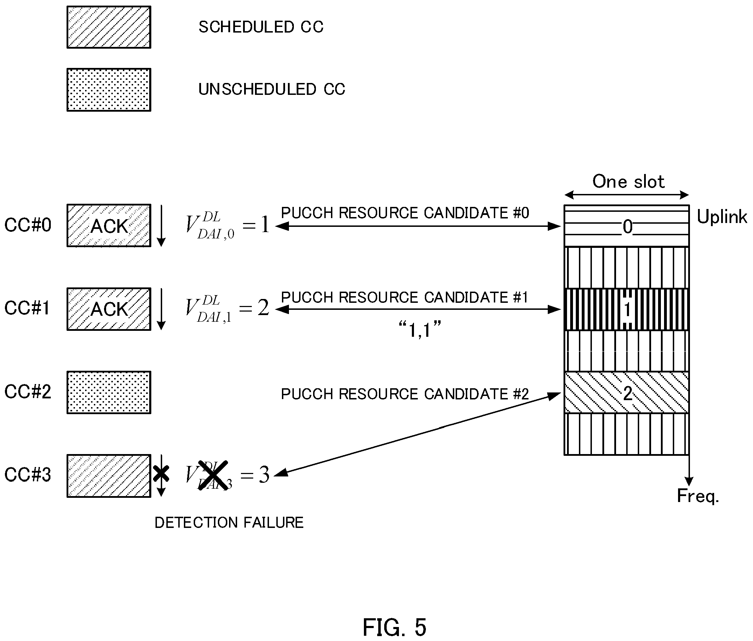

FIG. 4 and FIG. 5 illustrate an example of an ACK/NACK feedback method for use when DL transmission is performed from three CCs (here, CC #0, #1 and #2) to a user terminal in which a plurality of CCs (four CCs in this case) are configured. In this case, the radio base station configures DAI = 1 as the downlink control information of CC #0, configures DAI = 2 as the downlink control information of CC #1, and configures DAI = 3 as the downlink control information of CC #3. That is, CC #3 is the cell with the largest DAI value among the cells that are scheduled, and the downlink control information of CC #3 is the last PDCCH scheduled among the plurality of cells.

FIGs. 4 and 5 illustrate a case where different uplink control channel resource (PUCCH resource) candidates are configured for each scheduled cell (in which DL signals are transmitted). More specifically, PUCCH resource #0 is configured for CC #0, PUCCH resource #1 is configured for CC #1 and PUCCH resource #2 is configured for CC #3.

The radio base station can report the user terminal of information on each PUCCH resource candidate by downlink control information and/or higher layer signaling (for example, RRC signaling). Alternatively, the user terminal can also determine each PUCCH resource candidate by using the control channel element (CCE/ECCE) of the downlink control information of each cell, the offset value, and the like. Alternatively, some PUCCH resources (for example, PUCCH resources corresponding to the cell with the largest DAI value) or all PUCCH resources may be defined in advance by the specification.

When downlink control information of a plurality of cells is received, the user terminal can control the transmission of ACKs/NACKs using the PUCCH resource associated with the cell having the largest DAI value included in the downlink control information. The radio base station performs the reception operation assuming that ACKs/NACKs are fed back using the PUCCH resource that is configured in the cell with the largest DAI among the plurality of scheduled cells. If the ACK/NACK cannot be detected with the PUCCH resource corresponding to the cell with the largest DAI, the ACK/NACK receiving operation is performed on the PUCCH resource configured as the cell with the second largest DAI.

For example, when all the DL transmissions of CC #0, #1 and #3 scheduled to the user terminal are received (see FIG. 4), the cell with the largest DAI is CC #3. In this case, the user terminal transmits ACKs/NACKs for the DL transmissions of CC #0, #1 and #3 using PUCCH resource #2 corresponding to CC #3. For example, when transmitting ACKs for CC #0 and #3 and a NACK for CC #1, the user terminal allocates the information of "1, 0, 1" to PUCCH resource #2 and transmits this. Here, a "1" corresponds to an ACK, and a "0" corresponds to a NACK. Note that when the user terminal fails to detect another cell (for example, CC #1), the DAI values becomes discontinuous, so that the user terminal recognizes the detection failure of CC #1 and feed back a NACK.

The radio base station performs reception operation on the assumption that ACKs/NACKs are fed back using PUCCH resource #2 that is configured for CC #3 having the largest DAI among the plurality of scheduled cells. In FIG. 4, the radio base station detects ACKs/NACKs in PUCCH resource #2, so that the radio base station can judge that the user terminal has received CC #3 (last PDCCH) with the largest DAI without detection failure.

When ACKs/NACKs are received in PUCCH resource #2 configured for CC #3, the radio base station can determine that the user terminal feeds back the ACKs/NACKs for all CCs, and determine the ACK/NACK codebook size accordingly. This makes it possible to match the recognition of the ACK/NACK codebook size between the user terminal and the radio base station, to appropriately feed back HARQ-ACKs, and to suppress the degradation of communication quality.

On the other hand, assume that the detection of CC #3 has failed (see FIG. 5) when the users CC #0, #1 and #3 are scheduled to the user terminal. In FIG. 5, the value of the largest DAI among the downlink control information received by the user terminal is 2 (corresponding to CC #1). That is, the CC (CC #3) having the largest DAI among the downlink control information of the scheduled cells and the CC (CC #1) having the largest DAI among the downlink control information of the cells received by the user terminal are different.

In this case, the user terminal transmits ACK/NACK for the DL transmissions of CC #0 and #1 using PUCCH resource #1 corresponding to CC #1. For example, when sending ACKs to CC #0 and #1, the user terminal allocates the information "1, 1" to PUCCH resource #1 and transmits this. If the user terminal fails to detect another cell (for example, CC #0), the DAI values becomes discontinuous, so that the user terminal can recognize the detection failure of CC #0 and feed back a NACK.

In this way, when the user terminal fails to detect CC #3 (last PDCCH) having the largest DAI, the user terminal cannot recognize the detection failure, and so the ACK/NACK for CC #3 may not be fed back.

In the case of FIG. 5, since the radio base station cannot detect ACKs/NACKs in PUCCH resource #2, the radio base station can judge that the user terminal has failed to detect CC #3 (last PDCCH) having the largest DAI. Next, the radio base station performs the ACK/NACK reception operation in PUCCH resource #1 that is configured for CC #1 with the second largest DAI among the plurality of scheduled cells.

When ACKs/NACKs are received in PUCCH resource #1 configured for CC #1, the radio base station can determine the ACK/NACK codebook size on the assumption that the ACK/NACK for CC #3, which the user terminal has failed to detect, is not fed back from the user terminal. This makes it possible to match the recognition of the ACK/NACK codebook size between the user terminal and the radio base station, to appropriately feed back the HARQ-ACK, and to suppress the degradation of communication quality.

### (Variation)

It should be noted that although FIG. 4 and FIG. 5 illustrate a case where different PUCCH resources are configured for CCs with different DAI values, the present embodiment is not limited to this. For example, a common PUCCH resource may be configured in cells (for example, CC #0 to CC #2 in FIGs. 4 and 5) apart from the cell with the largest DAI (CC #3 in FIGs. 4 and 5). In this case, similar to the case in existing systems, the radio base station can designate the PUCCH resources for other cells with the ARI (ACK/NACK Resource Indicator), using the power field in the downlink control information of secondary cells.

If the primary cell is included in the other cells, different PUCCH resources may be configured among the primary cell (for example, CC #0 in FIG. 4 and FIG. 5), the cell having the largest DAI (CC #3 in FIG. 4 and FIG. 5), and the other cells (CC #1 and 2 in FIG. 4 and FIG. 5). In this case, the PUCCH resource of the primary cell may be configured to be determined based on the control channel element (CCE) constituting the downlink control channel.

In this way, by configuring a common PUCCH resource for a plurality of cells other than the cell with the largest DAI (last PDCCH), the number of PUCCH resources to configure can be reduced even when the CCs (or scheduled CCs) to be configured in the user terminal increase.

### (Second Example)

In the second example, a case will be described where information on cells from which the user terminal receive DL signals (scheduling information of detected cells) and ACK/NACK results, including at least ACKs/NACKs for received DL signals, are fed back.

As an example of the second example, cells that are configured (or cells that can be configured) in the user terminal are classified into a plurality of groups, and information on groups to which cells where DL signals are received belong, and the transmission of ACKs/NACKs for the cells included in these groups are controlled. For example, when 32 CCs are configured for the user terminal (when 32 CCs can be configured), the 32 CCs are divided into Z groups and the scheduling information of each CC group can be transmitted wirelessly to the radio base station using a Z-bit bitmap.

If Z is set to 32, the user terminal can report the radio base station of the reception status of the DL transmission corresponding to each CC and the ACK/NACK result, using uplink control information. For a CC where no DL signal is transmitted, the user terminal can feed back a NACK. In such a case, although the capacity of the bitmap included in the UL signal becomes large, it is still possible to report the reception status of each CC in detail to the radio base station.

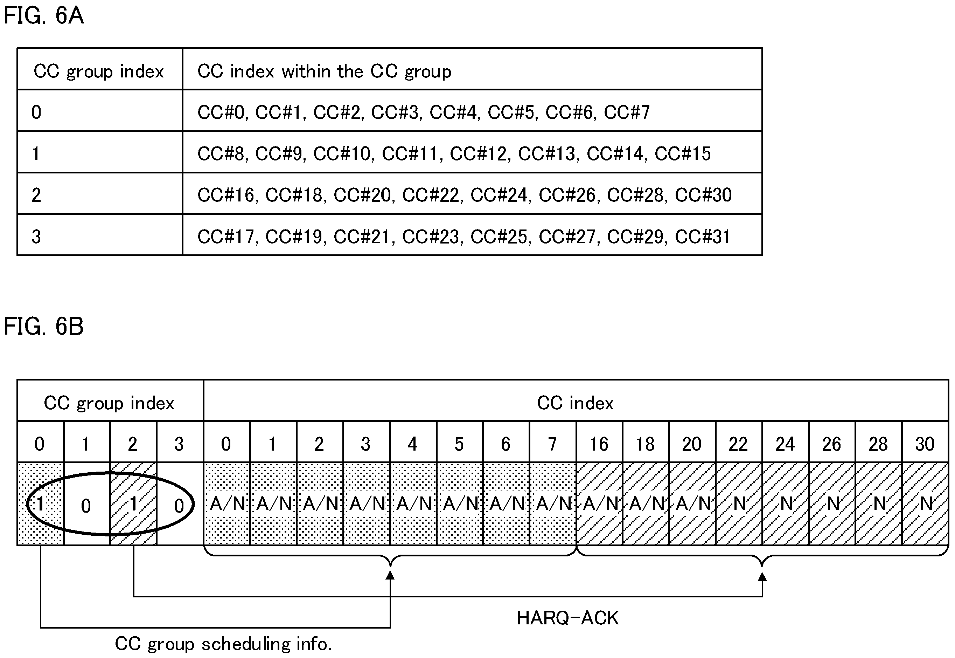

Alternatively, when 32 CCs are grouped (for example, Z = 4), multiple CCs (for example, eight CCs) are classified into each group. In this case, the user terminal can report the scheduling information of the CC groups (information on the CC groups corresponding to received DL signals) to the radio base station using a 4-bit bitmap (see FIG. 6).

In the table of FIG. 6A, CCs (CC #0 to CC #7) having consecutive cell indices are allocated to group #0, and CCs (CC #8 to CC #15) with consecutive cell indices are allocated to group #1. Also, CCs with discontinuous cell indices (CC #16, #18, #20, #22, #24, #26, #28 and #30) are assigned to group #2, and CCs with discontinuous cell indices (CC #17, #19, #21, #23, #25, #27, #29, and #31) are assigned to group #3. Of course, the number of CCs and the CC indices to assign to each group are not limited to these.

The user terminal can be configured to feed back ACK/NACK for a cell included in a group when at least one CC included in each group receives a DL signal. For example, suppose that the user terminal receives DL signals for CC #0 to CC #7, CCs #16, #18 and #20.

In this case, the user terminal feeds back information indicating that the user terminal has received DL signals in group #0, to which CC #0 to CC #7 of the received DL signals belong, and in group #2, to which CCs #16, #18 and #20 belong (group scheduling information). In addition, the user terminal can selectively feed back ACK/NACK information for each cell belonging to the selected groups.

For example, as illustrated in FIG. 6B, the user terminal configures the bit map corresponding to group #0 and group #2 to "1," and feed back ACKs/NACKs for the cells included in these group #0 and group #2 in bitmap format and/or the like. In this case, the user terminal uses a 4-bit bit map that defines the CC group indices, to report that DL signals have been received in the cells (any cell) included in each group. In addition, the user terminal can report the ACK/NACK bit sequence using each CC field following each CC group index. Note that the format of feedback is not limited to the bitmap format.

In this case, the user terminal may control by changing the length (size) of the subsequent ACK/NACK bit sequence according to the value of the first bit indicating the CC group index (the number of "1"). In FIG. 6B, only the ACKs/NACKs for the cells included in group #0 and group #2 have to be encoded and fed back. Note that the user terminal configures and feeds back NACKs to the cells (CC #22, #24, #26, #28 and #30 in FIG. 6B) where DL signals were not received in group #2.

Also, the user terminal can encode the bits indicating the CC group indices separately (independently) from the bits indicating ACKs/NACKs for each individual CC. This makes it possible for the decoding side (for example, the radio base station) to appropriately know the size (codebook size) of the ACK/NACK bit sequence based on the bit sequence indicating the CC group indices.

Also, when information on the cell groups of received DL signals (CC group indices, CC group scheduling information, etc.) and ACKs/NACKs related thereto are separately coded, the user terminal can transmit respective bit sequences using different resources, timings and/or PUCCH formats.

For example, the user terminal can transmit by applying a predetermined PUCCH format corresponding to the number (Z) of CC groups to the information on CC group indices. As an example, if Z is greater than 2 and less than or equal to 16 (2 < Z ≦ 16), the user terminal transmits information on CC group indices in existing PUCCH format 3. Also, if Z is 2 (Z = 2), the user terminal can transmit the information on CC group indices in existing PUCCH format 1b. The resource (PUCCH resource) to which the information on CC group indices is allocated can be reported to the user terminal using higher layer signaling or the like.

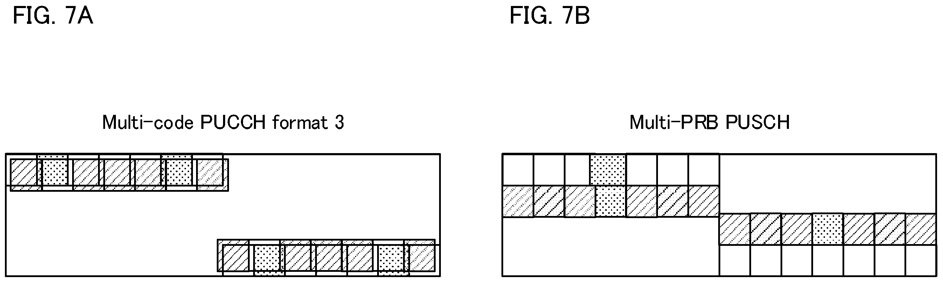

On the other hand, the user terminal can feed back ACK/NACK to the radio base station using a new PUCCH format/new PUCCH resource (see FIG. 7A) or PUSCH (FIG. 7B). In this manner, by separately transmitting information on CC group indices and ACKs/NACKs, it is possible to independently control the information on CC group indices and the error rate of ACKs/NACKs. When an error occurs in the information on CC group indices, the overall ACK/NACK error rate becomes significantly high, so it is desirable to apply a transmission method with higher reliability to information on the CC group-related information than ACKs/NACKs. For example, transmitting at a lower coding rate, a method of allocating more resources, and so on may be possible.

Alternatively, the user terminal may encode the information on CC groups and the corresponding ACKs/NACKs separately and transmit them using the same resource. In this case, the information on CC groups and the ACKs/NACKs following the information on CC groups can be allocated to and transmitted in the PUSCH (see FIG. 7B) or can be allocated to and transmitted in a new PUCCH format/new PUCCH resource (FIG. 7A). In this manner, by transmitting information on CC group indices and ACKs/NACKs together, it is possible for the user terminal to reduce the amount of uplink resources required for ACK/NACK transmission and to reduce the overhead.

Also, depending on the design of the new PUCCH format/new PUCCH resource, the user terminal may encode information on CC group indices and ACKs/NACKs in joint coding (concatenated coding). In this case, it is possible to use a method in which information on CC group indices and ACK/NACK are regarded as one codeword, the CRC is appended thereto, and the error correction code is applied.

In this manner, by grouping a plurality of cells into groups and selectively feeding back information on the cell groups (CC group indices) of received DL signals and ACK/NACKs for the cells included in each group, an increase in the overhead of uplink control signals can be suppressed. In addition, since the user terminal separately encodes the information on CC group indices and the ACKs/NACKs for the corresponding cells and transmits these to the radio base station, the recognition of the ACK/NACK codebook size can be matched between the user terminal and the radio base station. As a result, HARQ-ACK feedback can be performed appropriately, and the degradation of communication quality can be suppressed.

### (Radio Communication System)

Now, the structure of the radio communication system according to an embodiment of the present invention will be described below. In this radio communication system, the radio communication methods of the above-described embodiments are employed. Note that the radio communication methods of the above-described embodiments may be applied individually or may be applied in combination.

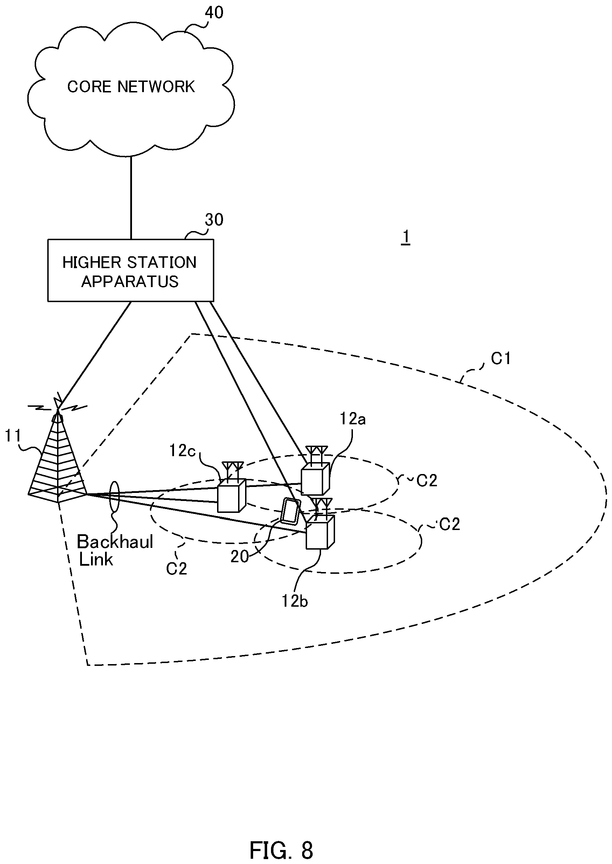

FIG. 8 is a diagram to illustrate an example of a schematic structure of a radio communication system according to one embodiment of the present invention. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 illustrated in FIG. 8 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and OFDMA may be used in the uplink.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Blocks) is communicated in the PBCH.

The downlink L1/L2 control channels include downlink control channels (the PDCCH (Physical Downlink Control CHannel) and/or the EPDCCH (Enhanced Physical Downlink Control Channel)), the PCFICH (Physical Control Format Indicator CHannel), the PHICH (Physical Hybrid-ARQ Indicator CHannel) and so on. Downlink control information (DCI) including PDSCH and PUSCH scheduling information is communicated by the PDCCH. The number of OFDM symbols for use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Uplink control information (UCI: Uplink Control Information), including at least one of delivery acknowledgment information (ACK/NACK) and radio quality information (CQI), is transmitted by the PUSCH or the PUCCH. By means of the PRACH, random access preambles for establishing connections with cells are communicated.

### <Radio base station>

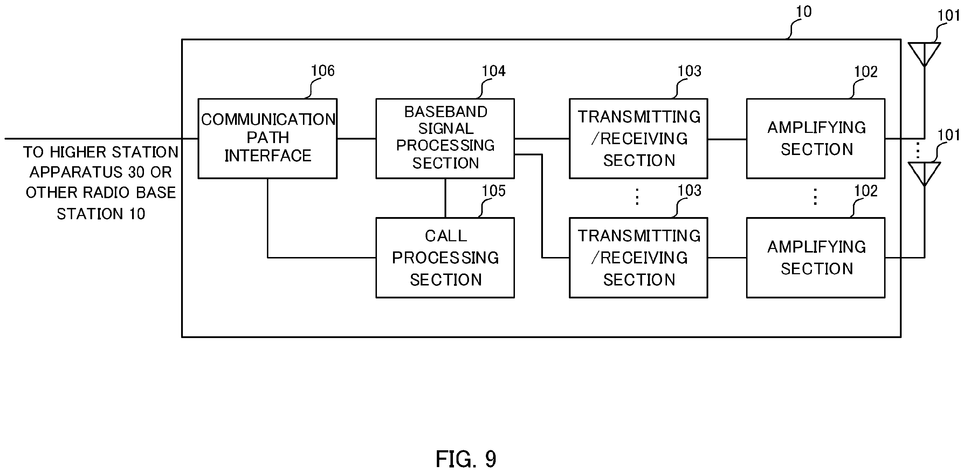

FIG. 9 is a diagram to illustrate an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections (transmission sections) 103 can transmit downlink control information (DCI) including DAIs. Further, the transmitting/receiving sections (receiving sections) 103 can receive HARQ-ACKs transmitted from the user terminal in predetermined PUCCH resources. Further, the transmitting/receiving section (receiving section) 103 can receive information on the cells of DL signals (scheduling information of detected cells) received by the user terminal by using a bit map format or the like.

The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

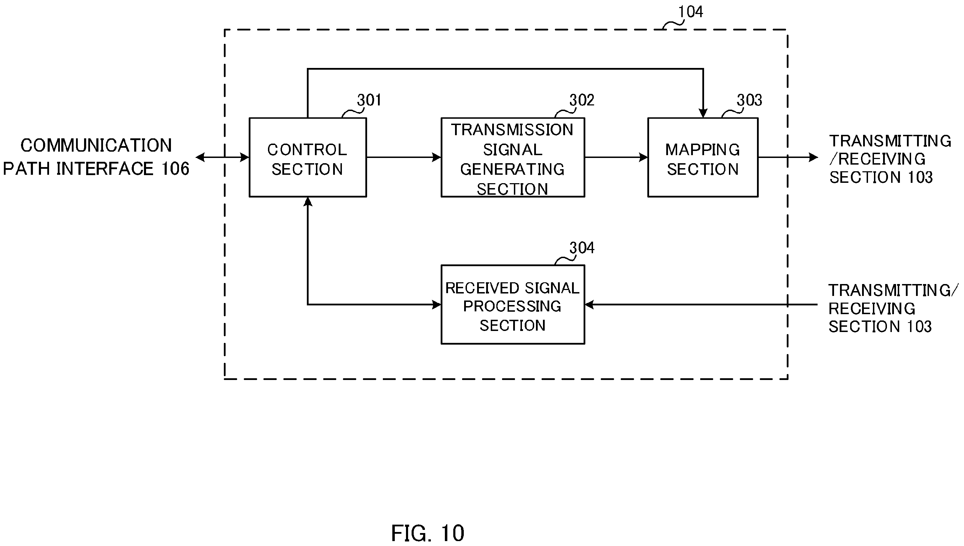

FIG. 10 is a diagram to illustrate an example of a functional structure of a radio base station according to the present embodiment. Note that, although FIG. 10 primarily illustrates functional blocks that pertain to characteristic parts of the present embodiment, the radio base station 10 has other functional blocks that are necessary for radio communication as well. As illustrated in FIG. 10, the baseband signal processing section 104 has a control section (scheduler) 301, a transmission signal generating section (generating section) 302, a mapping section 303 and a received signal processing section 304.

The control section (scheduler) 301 controls the scheduling (for example, resource allocation) of downlink data signals that are transmitted in the PDSCH and downlink control signals that are communicated in the PDCCH and/or the EPDCCH. Also, the control section 301 controls the scheduling of system information, synchronization signals, paging information, CRSs (Cell-specific Reference Signals), CSI-RSs (Channel State Information Reference Signals) and so on. Furthermore, the control section 301 also controls the scheduling of uplink reference signals, uplink data signals that are transmitted in the PUSCH, and uplink control signals that are transmitted in the PUCCH and/or the PUSCH.

The control section 301 controls the retransmission of downlink data/new data transmission based on delivery acknowledgment signals (HARQ-ACKs) fed back from the user terminals. Further, the control section 301 takes into consideration the PUCCH resource that is configured in the cell with the largest DAI value included in the DCI, or the cell with the largest cell index, among the plurality of cells performing DL transmission, and controls the ACK/NACK receiving process. Note that such receiving processing may be performed in the received signal processing section 304 based on a command from the control section 301.

Further, the control section 301 can control DL transmission by including PUCCH resource information that is different than other cells in the DCI of the cell having the largest DAI value or the cell index having the largest cell index among the plurality of DCIs to be transmitted. Note that, for the control section 301, a controller, a control circuit or a control device that can be described based on common understanding of the technical field to which the present invention pertains can be used.

The transmission signal generating section 302 generates DL signals (downlink control signals, downlink data signals, downlink reference signals and so on) based on commands from the control section 301, and outputs these signals to the mapping section 303. To be more specific, the transmission signal generation section 302 generates a downlink data signal (PDSCH) including user data, and outputs it to the mapping section 303. Further, the transmission signal generation section 302 generates a downlink control signal (PDCCH/EPDCCH) including DCI (UL grant), and outputs it to the mapping section 303. Further, the transmission signal generation section 302 generates downlink reference signals such as CRS and CSI-RS, and outputs them to the mapping section 303.

For the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined radio resources based on commands from the control section 301, and outputs these to the transmitting/receiving sections 103. For the mapping section 303, mapper, a mapping circuit or a mapping device that can be described based on common understanding of the technical field to which the present invention pertains can be used.

The received signal processing section 304 performs the reception process (for example, demapping, demodulation, decoding, etc.) of the UL signals (HARQ-ACK, PUSCH, etc.) transmitted from the user terminal 20. The processing results are output to the control section 301. The receiving process section 304 can be constituted by a signal processor, a signal processing circuit or a signal processing device, and a measurer, a measurement circuit or a measurement device that can be described based on common understanding of the technical field to which the present invention pertains.

### <User terminal>

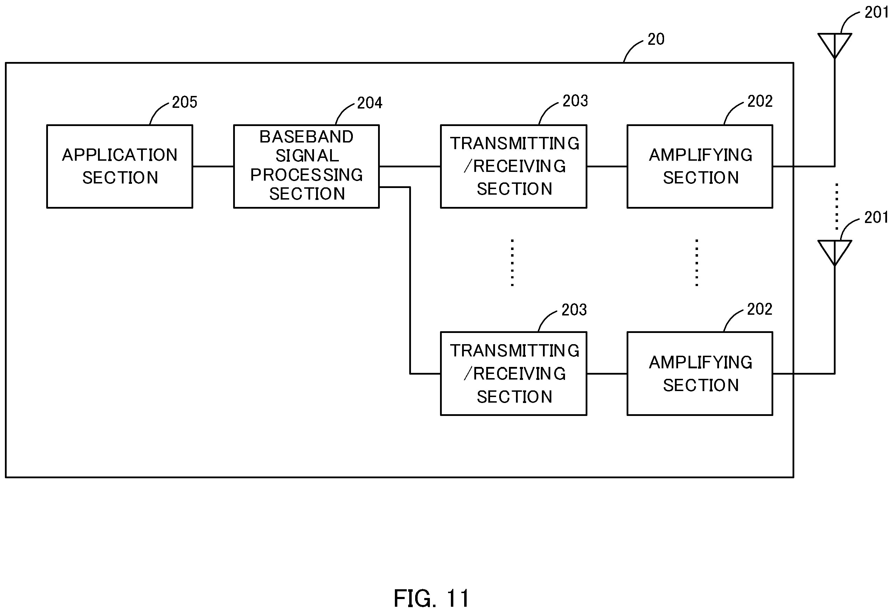

FIG. 11 is a diagram to illustrate an example of an overall structure of a user terminal according to an embodiment of the present invention. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmitting sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signal is subjected to frequency conversion and converted into the baseband signal in the transmitting/receiving sections 203, and output to the baseband signal processing section 204.

The transmitting/receiving section (receiving section) 203 receives DL data signals (for example, the PDSCH) and downlink control information (for example, DCI including UL grants, DAIs, etc.). Further, the transmitting/receiving section (transmission section) 203 transmits HARQ-ACKs for DL data signals and the PUSCH for the UL grant. Further, the transmitting/receiving section (transmission section) 203 can transmit information on the cells of the DL signal received at the user terminal (scheduling information of the detected cells) in a bit map format or the like. Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency bandwidth in the transmitting/receiving sections 203. The radio frequency signals that are subjected to frequency conversion in the transmitting/receiving sections 203 are amplified in the amplifying sections 202, and transmitted from the transmitting/receiving antennas 201.

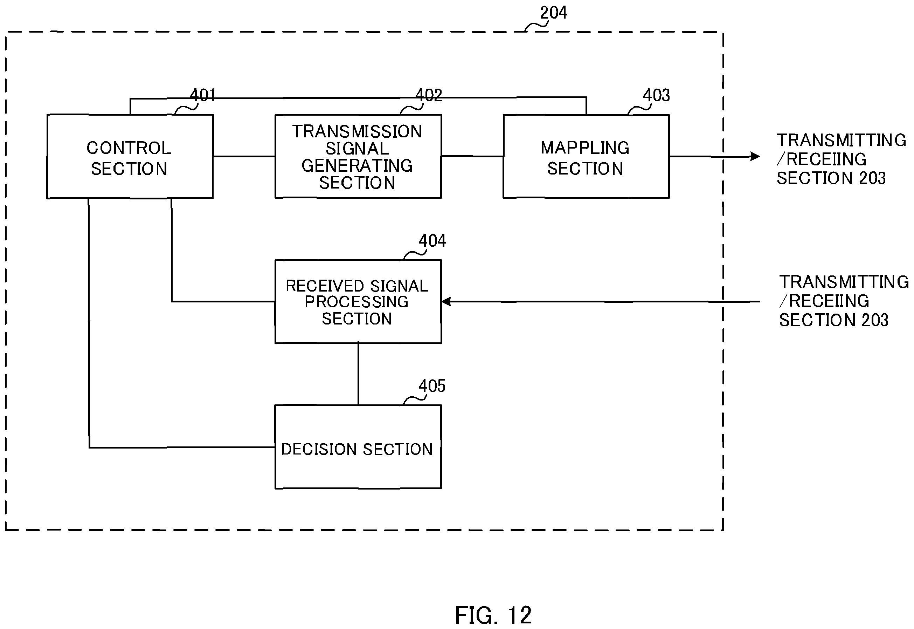

FIG. 12 is a diagram to illustrate an example of a functional structure of a user terminal according to the present embodiment. Note that, although FIG. 12 primarily illustrates functional blocks that pertain to characteristic parts of the present embodiment, the user terminal 20 has other functional blocks that are necessary for radio communication as well. As illustrated in FIG. 12, the baseband signal processing section 204 provided in the user terminal 20 has a control section 401, a transmission signal generating section 402, a mapping section 403, a received signal processing section 404 and a decision section 405.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not re transmission control is necessary for the downlink data signals, and so on. To be more specific, the control section 401 can control the transmission signal generating section 402, the mapping section 403 and the received signal processing section 404.

When DCIs of a plurality of cells are received, the control section 401 can control the transmission of ACKs/NACKs using the PUCCH resource that is configured for the cell (PDCCH) having the largest DAI value included in the received DCI or for the cell having the largest cell index. Further, the control section 401 can control the transmission of ACK/NACK by using the uplink control channel resource information included in the DCI with the largest DAI value among the received DCIs.

Further, when the DCI of the cell having the largest DAI value or the cell having the largest cell index among the plurality of DCIs transmitted from the radio base station is not received, the control section 401 can perform control so that ACKs/NACKs corresponding to the cell with the largest DAI value or the cell with the largest cell index are not transmitted. Also, when the DCI of another cell different from the cell having the largest DAI value or the cell index having the largest cell index among the plurality of DCIs transmitted from the radio base station is not received, the control section 401 can control transmitting a NACK to this cell.

Further, when a plurality of cells are grouped and classified, the control section 401 can control the transmission of information on the groups to which cells where DL signal are received belong and ACK/NACKs for the cells included in these groups. In this case, the control section 401 can perform control so that ACKs/NACKs for the cells included in the groups to which the cells of received DL signals belong are transmitted in a bitmap, and ACKs/NACKs are transmitted to the groups in which the cells where DL signals are received do not belong. Further, the control section 401 can separately encode the information of the groups to which the cells of the received DL signals belong and the information of the ACKs/NACKs for the cells included in the groups and control the transmission.

Note that, for the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs), channel state information (CSI) and so on, based on commands from the control section 401.

Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal. For the transmission signal generating section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generating section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs receiving processes (for example, demapping, demodulation, decoding and so on) of DL signals (for example, downlink control signals transmitted from the radio base station, downlink data signals transmitted in the PDSCH, and so on). The received signal processing section 404 outputs the information received from the radio base station 10, to the control section 401 and the decision section 405. The received signal processing section 404 outputs, for example, broadcast information, system information, RRC signaling, DCI and so on, to the control section 401.

The received signal processing section 404 can be constituted by a signal processor, a signal processing circuit or a signal processing device, and a measurer, a measurement circuit or a measurement device that can be described based on common understanding of the technical field to which the present invention pertains. Also, the received signal processing section 404 can constitute the receiving section according to the present invention.

The decision section 405 makes retransmission control decisions (ACKs/NACKs) based on the decoding results in the receiving process section 404, and, furthermore, outputs the results to the control section 401. When downlink signals (PDSCH) are transmitted from multiple CCs (for example, six or more CCs), retransmission control decisions (ACKs/NACKs) are made on a per CC basis, and output to the control section 401. For the decision section 405, a decision maker, a decision making circuit or a decision making device that can be described based on common understanding of the technical field to which the present invention pertains can be used.

Note that the block diagrams that have been used to describe the above embodiments illustrate blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be used individually or in combinations, and may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (the MIB (Master Information Block) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-159998, filed on August 13, 2015, including the specification, drawings and abstract, is incorporated herein by reference in its entirety.

## Claims

1. A user terminal comprising:
a receiving section that receives DL signals transmitted from a plurality of cells; and
a control section that controls transmission of ACKs/NACKs in response to the received DL signals,
wherein, when downlink control information of a plurality of cells is received, the control section controls the transmission of the ACKs/NACKs using an uplink control channel resource that is configured for a cell where a value of a DL assignment index included in the received downlink control information is largest or for a cell with a largest cell index.

2. The user terminal according to claim 1, wherein, in the downlink control information of the cell where the value of the DL assignment index is the largest among a plurality of downlink control information transmitted from the radio base station, or of the cell with the largest cell index, uplink control channel resource information that is different than other cells is included.

3. The user terminal according to claim 1 or 2, wherein the control section controls the transmission of the ACKs/NACKs by using uplink control channel resource information included in the downlink control information having the largest DL assignment index value among the received downlink control information.

4. The user terminal according to one of claims 1 to 3, wherein, when the downlink control information of the cell with the largest DL assignment index or the cell with the largest cell index among the plurality of pieces of downlink control information transmitted from the radio base station is not received, an ACK/NACK for the cell having the largest DL assignment index value or the cell having the largest cell index is not transmitted.

5. The user terminal according to claim 4, wherein, when downlink control information of another cell, which is different than the cell with the largest DL assignment index or the cell with the largest cell index among the plurality of pieces of downlink control information transmitted from the radio base station, is not received, a NACK is transmitted to for the other cell.

6. A user terminal comprising:
a receiving section that receives DL signals transmitted from a plurality of cells; and
a control section that controls transmission of ACKs/NACKs in response to the received DL signals, and information about cells from which the DL signals are received, wherein:
the plurality of cells are grouped and classified; and
the control section controls transmission of information about groups to which the cells from which the DL signals are received belong and ACKs/NACKs for a cell included in the groups.

7. The user terminal according to claim 6, wherein the control section exerts control so that an ACK/NACK for a cell corresponding to a group where a cell from which a DL signal is received belongs is transmitted in a bitmap, and an ACK/NACK is not transmitted to a group not including a cell from which a DL signal is received.

8. The user terminal according to claim 6 or claim 7, wherein the control section separately encodes information about the group where the cell from which the DL signal is received belongs and information about ACKs/NACKs for the cells included in this group, and controls the transmission.

9. A radio base station that communicates with a user terminal that can use a plurality of cells, the radio base station comprising:
a transmission section that performs DL transmission from each cell; and
a control section that controls reception of ACKs/NACKs transmitted from the user terminal in response to DL transmission,
wherein the control section controls the reception of the ACKs/NACKs taking into consideration an uplink control channel resource that is configured for a cell where a value of a DL assignment index included in the received downlink control information is largest or for a cell with a largest cell index.

10. A radio communication method for a user terminal that can communicate by using a plurality of cells, the radio communication method comprising:
receiving DL signals transmitted from a plurality of cells; and
controlling transmission of ACKs/NACKs in response to the received DL signals,
wherein, when downlink control information of a plurality of cells is received, the controlling controls the transmission of the ACKs/NACKs using an uplink control channel resource that is configured for a cell where a value of a DL assignment index included in the received downlink control information is largest or a cell with a largest cell index.
